# DEMANDE DE BREVET EUROPEEN

(11) **EP 4 268 578 A1**
(43) Date de publication de la demande: **01.11.2023**
(21) Numéro de dépôt: 22305629.2
(22) Date de dépôt: 27.04.2022
(51) Int. Cl.: A01G 9/24

(54) **DISPOSITIF POUR LE CONTROLE DE L'ENVIRONNEMENT POUR LES CULTURES DE PLANTES EN ATMOSPHERE CONFINEE OU SEMI-CONFINEE**

(71) Demandeur: Zoya World, 38260 La Côte Saint André (FR)
(72) Inventeur: JACOMELLI, Hugo, 38260 LA COTE SAINT ANDRE (FR)
(74) Mandataire: Cabinet Nony

(57) **Abrégé**

Dispositif (10) pour le contrôle de l'environnement de cultures de plantes en atmosphère confinée ou semi-confinée, comprenant :

- une pluralité de lamelles (11) liées mécaniquement entre elles et montées mobiles en translation verticale entre une position déployée, dans laquelle elles sont espacées les unes des autres, et une position repliée, dans laquelle les lamelles sont empilées les unes sur les autres, au moins une partie des lamelles comprenant un ou plusieurs composants de contrôle de l'environnement choisis parmi :
une source de lumière (20) adaptée pour la culture des plantes,
une partie d'un système (21) de ventilation et/ou de climatisation et/ou d'apport en CO2,
une partie d'un système d'humidification (22),
- un mécanisme de déploiement/repliement configuré pour faire translater les lamelles de la position déployée à la position repliée et inversement.

## Description

### Domaine technique

La présente invention concerne le domaine des cultures de plantes en atmosphère confinée (fermes dites indoor) ou semi-confinée (serres).

En particulier, la présente invention concerne les dispositifs de contrôle de l'environnement pour les cultures de plantes en atmosphère confinée ou semi-confinée, notamment comprenant des dispositifs d'éclairage et/ou d'irrigation et/ou de contrôle de la température et/ou de ventilation et/ou d'apport en CO₂.

### Technique antérieure

La culture des plantes sous atmosphère confinée ou semi-confinée permet de contrôler les conditions de croissance desdites plantes. Il est ainsi possible de s'affranchir de contraintes naturelles et donc d'obtenir des récoltes de meilleures qualités et avec de meilleurs rendements que des cultures classiques à l'air libre.

Les cultures de plantes sous atmosphère confinée ou semi-confinée peuvent être de type « horizontal » ou de type « vertical».

Les cultures horizontales consistent à cultiver des plantes au sein de bacs horizontaux par rapport au sol, et, qui peuvent être superposés entre eux dans un système d'étage.

Les cultures verticales consistent à cultiver des plantes au sein de tours verticales par rapport au sol, les tours pouvant être alignées entre elles, de sorte à former des lignes de culture.

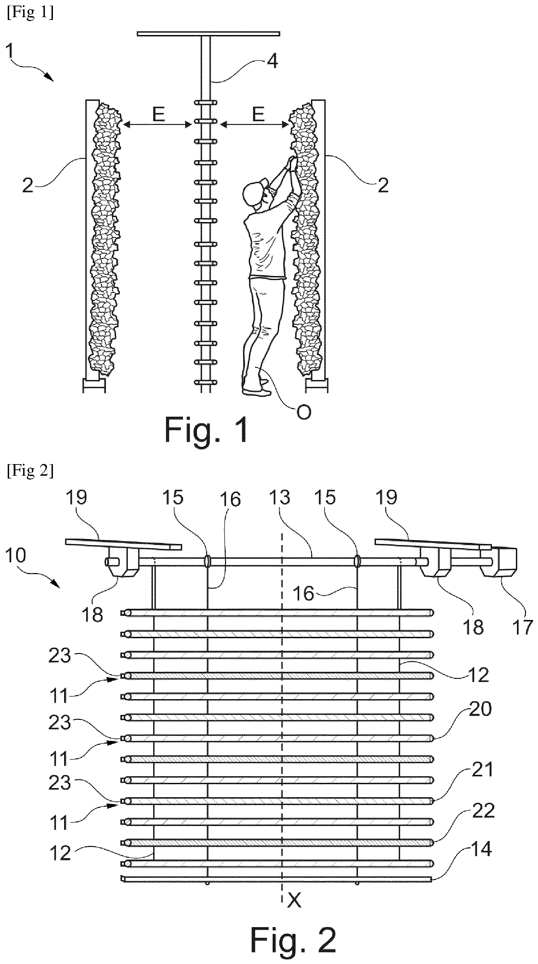

On a représenté à la figure 1, une partie d'un système de culture verticale 1 déjà connu. Ce système 1 comprend généralement une pluralité de lignes de culture 2, qui s'étendent verticalement, parallèles entre elles, un mur intermédiaire 4 étant agencé entre deux lignes de culture 2 adjacentes. Le mur intermédiaire 4 sert usuellement à supporter des sources de lumière artificielle adaptées pour apporter une énergie constante à l'ensemble des plantes cultivées.

Dans la plupart des systèmes de culture verticale 1 actuelles, le mur intermédiaire 4 est fixe. Comme montré à la figure 1, un espacement minimal E, formant un couloir, est nécessaire entre un mur intermédiaire 4 et une ligne de culture verticale 2 adjacente, afin qu'un opérateur O puisse accéder à ladite la ligne de culture 2, afin de contrôler et/ou de récolter les plantes, et/ou accéder aux différents éléments de contrôle de l'environnement de culture, afin de les remplacer et/ou de les réparer.

De facto, la valeur de cet espacement minimal E est intrinsèquement importante comparativement aux largeurs des murs intermédiaires 4 et des lignes de culture verticales 2. Autrement exprimé, la totalité de ces espacements 5 formant des couloirs pour opérateur O peut représenter une valeur allant de 30 % à 50 % de la surface totale de la zone de culture. Cette valeur importante constitue un espace important non efficient, que l'on peut traduire comme une perte importante de rendement de culture et comme un coût supplémentaire pour l'installation de culture de plantes, notamment pour son chauffage et/ou sa climatisation.

En outre, la nécessité d'un espacement minimal E entre un mur intermédiaire 4 et une ligne de culture 2 ne permet pas d'agencer des sources de lumière artificielle au plus près des plantes supportées par la ligne de culture 2. Les murs intermédiaires 4 connus ne sont alors pas adaptés aux nouvelles sources de lumière artificielle qui sont de plus en plus efficaces et qui pourraient être en théorie installées à de très faibles distances des cultures, i.e. leur positionnement au plus près des cultures serait optimal.

De plus, les murs intermédiaires 4 connus ont également pour inconvénient d'empêcher une bonne circulation de l'air dans la zone de culture. Par conséquent, il y a des variations en température, en humidité et/ou en quantité de CO₂ dans la zone de culture. Ces variations peuvent impacter de manière négative la qualité et/ou la quantité des récoltes. Par ailleurs, une mauvaise circulation de l'air peut générer divers agents pathogènes dangereux pour les plantes, tel que l'apparition de moisissures.

La demande de brevet WO 2018/037188 A1 décrit une installation pour la culture de plantes en atmosphère confinée, comprenant des supports verticaux de culture fixés sur un système de support, un système d'éclairage disposé en face des supports verticaux de culture et un système de mobilité pour le déplacement du système d'éclairage et/ou pour le déplacement simultané de deux supports verticaux de culture. Toutefois, cette installation nécessite une surface au sol importante, dédiée uniquement au déplacement du système d'éclairage et/ou des supports verticaux de culture, qui n'est donc pas utilisée pour la culture des plantes, ce qui constitue une perte considérable du rendement de l'installation.

La demande de brevet WO 2014/005156 A2 décrit une installation pour la culture de plantes en atmosphère confinée, qui comprend un système d'éclairage comprenant des barres lumineuses à diodes électroluminescentes (LED), suspendues à des fils, qui peuvent être remontées par enroulement. Cependant, une fois remontées, les barres lumineuses LED ne sont plus accessibles à un opérateur.

Il existe donc un besoin pour un dispositif de contrôle de l'environnement pour les cultures de plantes en atmosphère confinée ou semi-confinée, notamment afin de pallier les inconvénients précités.

En particulier, il existe un besoin pour un dispositif de contrôle de l'environnement qui puisse être placé au plus près des plantes d'une zone de culture tout en permettant un accès aisé à celles-ci par un opérateur, pour des opérations de contrôle et/ou de récolte, et un accès aisé au dispositif proprement dit, par exemple pour des opérations de maintenance de ses composants, et tout en occupant le moins de surface possible.

Le but de l'invention est de répondre, au moins en partie, à ce besoin.

### Exposé de l'invention

Pour ce faire, l'invention concerne un dispositif pour le contrôle de l'environnement de cultures de plantes en atmosphère confinée ou semi-confinée, comprenant :
- une pluralité de lamelles liées mécaniquement entre elles et montées mobiles en translation verticale entre une position déployée, dans laquelle elles sont espacées les unes des autres, et une position repliée, dans laquelle les lamelles sont empilées les unes sur les autres, au moins une partie des lamelles comprenant un ou plusieurs composants de contrôle de l'environnement choisis parmi :
   une source de lumière adaptée pour la culture des plantes,
   une partie d'un système de ventilation et/ou de climatisation et/ou d'apport en CO₂,
   une partie d'un système d'humidification,
- un mécanisme de déploiement/repliement configuré pour faire translater les lamelles de la position déployée à la position repliée et inversement.

De préférence, au moins une des lamelles comprend un support sur lequel le(s) composant(s) de contrôle de l'environnement est(sont) fixé(s) de manière amovible. De préférence, chacune des lamelles comprennent un support sur lequel le(s) composant(s) de contrôle de l'environnement est(sont) fixé(s) de manière amovible.

Le(s) support(s) peuvent être en un matériau inerte chimiquement vis-à-vis de l'eau, de préférence en aluminium, en polychlorure de vinyle ou en acier inoxydable.

De préférence, les lamelles sont parallèles entre elles. De préférence, les lamelles s'étendent dans un même plan.

De préférence, le rapport entre la hauteur occupée par les lamelles en position repliée sur la hauteur occupée par les lamelles en position déployée est inférieur à 0,50, de préférence inférieur à 0,25, de préférence inférieur à 0,20.

La hauteur occupée par les lamelles en position déployée peut être comprise entre 1 m et 20 m, et/ou, la hauteur des lamelles en position repliée peut être comprise entre 0,15 m et 5 m.

Selon une première alternative, le dispositif peut comprendre des fils pour lier mécaniquement les lamelles entre elles de sorte à être suspendues les unes aux autres par gravité dans la position déployée. De préférence, le dispositif comprend des entretoises configurées pour maintenir constante la longueur des fils entre deux lamelles adjacentes.

De préférence, le dispositif comprend au moins un poids, de préférence sous la forme d'une barre de poids, lié mécaniquement aux lamelles en dessous de celles-ci de sorte à maintenir l'axe longitudinal X le long duquel sont superposées les lamelles à la verticale.

De préférence, au moins une partie des lamelles comprend des contrepoids configurés pour compenser le poids du ou des composants de contrôle de l'environnement de sorte à maintenir à la verticale l'axe longitudinal X le long duquel sont superposées les lamelles.

Les contrepoids peuvent être de forme variée, par exemple sous la forme d'un parallélépipède, d'une sphère ou d'un tube.

Les contrepoids peuvent être des composants de contrôle de l'environnement.

De préférence, les contrepoids sont en un matériau inerte chimiquement vis-à-vis de l'eau, par exemple en acier inoxydable.

Les contrepoids peuvent être fixés, de préférence de manière amovible, sur les supports. Par exemple, les contrepoids peuvent être vissés ou clipsés sur les supports.

De préférence, le mécanisme de déploiement/repliement comprend au moins un câble fixé à la lamelle du dessous, ou le cas échéant au poids, de sorte qu'en tirant sur le câble, les lamelles sont ramenées de la position déployée à la position repliée. De préférence, le câble traverse les lamelles.

De préférence, le mécanisme de déploiement/repliement comprend au moins une bobine configurée pour enrouler le câble de manière manuelle ou de manière motorisée.

Le dispositif peut comprendre des platines de fixation configurées pour fixer le dispositif sur un mur et/ou un toit d'une installation de culture de plantes en atmosphère confinée ou semi-confinée.

De préférence, les platines de fixation comprennent des rails adaptés pour faire translater de manière manuelle ou motorisée les lamelles par rapport au mur et/ou au toit.

Selon une deuxième alternative, le dispositif peut comprendre au moins un mât télescopique comprenant un pied destiné être fixé sur ou dans le sol et des parties coulissantes sur lesquelles sont montées les lamelles, les parties coulissantes étant mobiles par rapport au pied entre une position repliée dans laquelle les lamelles sont en position repliée et une position déployée dans laquelle les lamelles les lamelles sont en position déployée.

De préférence, le dispositif comprend au moins deux mâts télescopiques selon ce qui précède.

De préférence, le mécanisme de déploiement/repliement comprend au moins un vérin ou au moins une crémaillère, de préférence motorisée, adapté(e) pour déployer et replier le(s) mât(s) télescopique(s).

De préférence, la source de lumière est une source de lumière artificielle, par exemple une LED ou un tube fluorescent, et/ou, la partie du système de ventilation et/ou de climatisation et/ou d'apport en CO₂ est une gaine de ventilation et d'apport en CO₂, et/ou, la partie du système d'humidification est un tuyau comprenant des buses de projection pour la brumisation d'eau.

Le dispositif peut comprendre un système de levée/descente configuré pour faire translater verticalement les lamelles entre une position basse et une position haute, les lamelles étant en position déployée dans les positions basse et haute.

En position haute, chaque lamelle est située à une altitude supérieure à celle occupée par ladite lamelle en position basse.

De préférence, le système de levée/descente comprend au moins une ficelle fixée à la lamelle du dessus de sorte qu'en tirant sur la ficelle, les lamelles sont tirées de la position basse à la position haute, et qu'en relâchant la ficelle, les lamelles sont ramenées de la position haute à la position basse.

De préférence, le système de levée/descente comprend au moins une bobine configurée pour enrouler la ficelle de manière manuelle ou de manière motorisée. L'invention concerne également une installation pour la culture de plantes en atmosphère confinée ou semi-confinée, comprenant :
- au moins une ligne de culture, destinée à supporter des plantes,
- au moins un dispositif selon l'une quelconque des revendications précédentes, agencé de sorte que dans la position déployée les lamelles s'étendent en regard de la ligne de culture.

La ou les lignes de culture peuvent être des lignes de culture verticale ou horizontale.

De préférence, l'installation comprend au moins deux lignes de culture, de préférence parallèles entre elles, le dispositif étant agencé entre les deux lignes de culture de sorte que dans la position repliée, l'espace entre les deux lignes de culture, dégagé des lamelles, forme un couloir accessible pour un opérateur.

De préférence, l'espace entre les deux lignes de culture étant compris entre 0,50 m et 5 m.

De préférence, l'installation comprend au moins une plateforme située au-dessus d'une des lignes de culture et à partir de laquelle un opérateur a accès au dispositif dans la position repliée des lamelles.

Selon un autre de ses aspects, l'invention concerne un procédé de fonctionnement d'une installation pour la culture de plantes en atmosphère confinée ou semi-confinée, l'installation comprenant au moins une ligne de culture supportant des plantes et un dispositif comprenant plusieurs sources de lumière adaptées pour la culture des plantes, les sources de lumière étant mobiles en translation verticale par rapport à la ligne de culture entre une position basse et une position haute,
le procédé comprenant les étapes suivantes :
i) illumination d'une portion des plantes de la ligne de culture pendant un intervalle de temps prédéfini, les sources de lumière étant en position basse,
ii) passage des sources de lumière de la position basse à la position haute,
iii) illumination d'une portion des plantes de la ligne de culture pendant un intervalle de temps prédéfini, les sources de lumière étant en position haute,
iv) passage des sources de lumière de la position haute à la position basse.

De préférence, les étapes i) à iv) sont répétées selon des cycles prédéterminés à intervalles de temps réguliers ou non.

De préférence, le procédé concerne le fonctionnement d'une installation telle que décrite précédemment.

De préférence, le dispositif utilisé durant le procédé est un dispositif pour le contrôle de l'environnement de cultures de plantes en atmosphère confinée ou semi-confinée, en particulier un dispositif comprenant un système de levée/descente tel que décrit précédemment.

De préférence, le procédé comprend, préalablement aux cycles, une étape de déploiement durant laquelle les sources de lumière passent d'une position repliée, dans laquelle les sources de lumière sont empilées les unes sur les autres, à une position déployée, dans laquelle les sources de lumière sont espacées les unes des autres.

De préférence, le procédé comprend, postérieurement à la répétition des cycles, une étape de repliement durant laquelle les sources de lumière passent d'une position déployée, dans laquelle les sources de lumière sont espacées les unes des autres, à une position repliée, dans laquelle les sources de lumière sont empilées les unes sur les autres.

Ainsi, l'invention consiste essentiellement en un dispositif comprenant des lamelles supportant un ou plusieurs composants de contrôle de l'environnement, les lamelles pouvant se déployer en regard d'une ligne de culture verticale ou horizontale et être repliées en s'empilant les unes sur les autres.

Le dispositif selon l'invention peut être mis en place dans une installation de culture de sorte que dans la position de déployée, les lamelles s'étendent sur une hauteur en regard et au plus près des plantes de la ligne de culture.

Dans la position repliée, les lamelles dégagent un espace depuis le sol qui forme un accès aux plantes pour un opérateur ou un robot.

Comparativement aux installations pour la culture de plantes en atmosphère confinée ou semi-confinée avec dispositifs de contrôle de l'environnement qui sont fixes, l'invention permet de réduire considérablement l'emprise au sol de ceux-ci et donc apporte un gain important de surface au sol pour l'implantation de lignes de culture. Ce gain peut atteindre de 30 à 50 % de la surface totale au sol d'une installation pour la culture de plantes en atmosphère confinée ou semi-confinée, ce qui permet d'augmenter fortement les rendements surfaciques.

Par ailleurs, le dispositif selon l'invention permet de mieux intégrer les composants de contrôle de l'environnement de culture en atmosphère confinée ou semi-confinée qui nécessitent d'être positionnés au plus près des plantes cultivées.

Le dispositif selon l'invention est avantageusement adapté pour contrôler de manière homogène l'environnement d'installations de culture de plantes à échelle industrielle.

En outre, le fait d'empiler les lamelles les unes sur les autres permet de les laisser accessibles même en position repliée, notamment pour un opérateur souhaitant réaliser la maintenance des composants de contrôle de l'environnement et/ou remplacer certains composants de contrôle par d'autres. On peut ainsi équiper au mieux et rapidement un dispositif en fonction des plantes cultivées.

L'invention a également pour avantage de permettre une bonne circulation de l'air dans la zone de culture lorsque les lamelles sont en position déployée. Par conséquent, le dispositif selon l'invention peut contrôler de manière uniforme l'environnement d'une installation pour la culture de plantes en atmosphère confinée ou semi-confinée ce qui a pour avantages de diminuer les risques de développement d'agents pathogènes dans la culture et d'augmenter les rendements.

D'autres avantages et caractéristiques ressortiront mieux à la lecture de la description détaillée, faite à titre illustratif et non limitatif, en référence aux figures suivantes.

### Brève description des dessins

[Fig 1] la figure 1 est une vue de face d'une installation de culture verticale selon l'état de l'art.
[Fig 2] la figure 2 est une vue en perspective d'un dispositif de contrôle de l'environnement selon l'invention, les lamelles étant en position déployée.
[Fig 3] la figure 3 est une vue en perspective d'un dispositif selon la figure 2 dans laquelle les composants de contrôle de l'environnement ne sont pas représentés, les lamelles étant en position déployée.
[Fig 3A] la figure 3A est une vue en perspective d'un dispositif selon la figure 2 dans laquelle les composants de contrôle de l'environnement ne sont pas représentés, les lamelles étant en position repliée.
[Fig 4] la figure 4 est une vue de face d'une installation de culture verticale comprenant deux dispositifs selon l'invention avec les lamelles en position déployée.
[Fig 4A] la figure 4A est une vue de face de l'installation de culture verticale selon la figure 4, les lamelles des dispositifs selon l'invention étant en position repliée.
[Fig 5A] la figure 5A est une vue en perspective d'une partie du support de la lamelle la plus haute d'un dispositif selon l'invention, la partie représentée du support étant traversée par un des câbles du mécanisme de tirage du dispositif selon l'invention.
[Fig 5B] la figure 5B est une vue en perspective d'une partie des supports de deux lamelles successives d'un dispositif selon l'invention, la partie représentée des supports étant traversée par un des fils et un des câbles du mécanisme de tirage du dispositif selon l'invention.
[Fig 5C] la figure 5C est une vue en perspective d'une partie de la barre de poids d'un dispositif selon l'invention, la partie représentée de la barre de poids étant traversée par un des câbles du mécanisme de tirage du dispositif selon l'invention.
[Fig 6A] la figure 6A est une vue en perspective d'un support d'une lamelle sur lequel est destinée être montée une source de lumière.
[Fig 6B] la figure 6B est une vue en perspective d'une lamelle d'un dispositif selon l'invention, la lamelle comprenant une source de lumière montée sur un support.
[Fig 7A] [Fig 7B] les figures 7A et 7B sont des vues en perspective d'une lamelle d'un dispositif selon l'invention, la lamelle comprenant un système de ventilation et/ou de climatisation et/ou d'apport en CO₂ monté sur un support.
[Fig 8] la figure 8 est une vue de face d'une installation de culture verticale comprenant deux dispositifs selon l'invention avec les lamelles en position déployée, l'installation de culture comprenant des plateformes pour le passage d'opérateurs .
[Fig 8A] la figure 8A est une vue de face de l'installation de culture verticale selon la figure 8, les lamelles des dispositifs selon l'invention étant en position repliée.
[Fig 9A] la figure 9A est une vue de face d'une installation de culture de plant de tomates comprenant un dispositif selon l'invention avec un premier mode d'arrangement des composants de contrôle de l'environnement, les lamelles étant en position déployée.
[Fig 9B] la figure 9B est une vue de face d'une installation de culture de plant de tomates comprenant un dispositif selon l'invention avec un deuxième mode d'arrangement des composants de contrôle de l'environnement, les lamelles étant en position déployée.
[Fig 9C] la figure 9C est une vue de face d'une installation de culture de plant de tomates comprenant un dispositif selon l'invention avec un troisième mode d'arrangement des composants de contrôle de l'environnement, les lamelles étant en position déployée.
[Fig 10] la figure 10 est une vue en perspective d'un autre mode de réalisation d'un dispositif selon l'invention, les lamelles étant en position déployée.
[Fig 11A] la figure 11A est une vue en perspective d'un autre mode de réalisation d'un dispositif selon l'invention, les lamelles comprenant des contrepoids.
[Fig 11B] la figure 11B est une vue de côté du dispositif selon la figure 11A.
[Fig 12] la figure 12 est une vue en perspective d'un autre mode de réalisation d'un dispositif selon l'invention, le dispositif comprenant un système de levée/descente.
[Fig 13] la figure 13 est une vue de face d'une installation de culture verticale comprenant un dispositif selon l'invention, le dispositif comprenant un système de levée/descente et les lamelles étant en position basse.
[Fig 13A] la figure 13A est une vue de face de l'installation de culture verticale selon la figure 13, les lamelles du dispositif étant en position haute.
[Fig 14] la figure 14 est une vue de face d'un autre mode de réalisation d'un dispositif selon l'invention, le dispositif comprenant des montants télescopiques, les lamelles étant en position déployée.
[Fig 15] la figure 15 est une vue de face d'une installation de culture verticale comprenant un dispositif selon la figure 14 avec les lamelles en position déployée.
[Fig 15A] la figure 15A est une vue de face de l'installation de culture verticale selon la figure 15, les lamelles du dispositif étant en position repliée.

### Description détaillée

La figure 1 a déjà été commentée en préambule et ne le sera donc pas plus ci-après.

Par souci de clarté, les mêmes références désignant les mêmes éléments selon l'état de l'art et selon l'invention sont utilisées pour toutes les figures 1 à 15A.

Dans l'ensemble de la demande, les termes « vertical », « horizontal », « bas » et « haut » correspondent à l'orientation ou à la position d'un élément ou d'un composant en référence à la gravité terrestre, une ligne verticale étant parallèle au vecteur de gravité, une ligne horizontale étant perpendiculaire au vecteur de gravité, et, le dessus étant à une altitude plus élevée que le dessous.

On a illustré à la figure 2, un dispositif 10 pour le contrôle d'un environnement de cultures de plantes en atmosphère confinée ou semi-confinée. Le dispositif 10 comprend une pluralité de lamelles 11, de préférence identiques, disposées les unes au-dessus des autres en étant parallèles, de préférence de manière horizontale, le long d'un axe vertical X.

Chacune des lamelles 11 supporte au moins un des composants de contrôle de l'environnement choisis parmi:
- une source de lumière 20, notamment une lumière artificielle, adaptée pour la culture de plantes,
- un système 21 de ventilation et/ou de climatisation et/ou d'apport en CO₂,
- un système d'humidification 22.

On peut combiner et agencer à souhait d'une lamelle 11 à l'autre ces différents composants 20, 21, 22.

Par exemple, comme illustré à la figure 2, les lamelles 11 supportent chacune un seul des composants de contrôle de l'environnement, sur un même côté latéral du dispositif 10, et de manière alternée par récurrence de l'ordre, non limitatif, de haut en bas, comme suit :
- une source de lumière 20, notamment une lumière artificielle, adaptée pour la culture de plantes,
- un système 21 de ventilation et/ou de climatisation et/ou d'apport en CO₂,
- une source de lumière 20, notamment une lumière artificielle, adaptée pour la culture de plantes,
- un système d'humidification 22.

Les sources de lumière 20 peuvent être reliées électriquement entre elles d'une lamelle 11 à une autre. De même, les systèmes 21 peuvent être reliés fluidiquement et électriquement entre eux d'une lamelle 11 à une autre, ainsi que les systèmes 22 peuvent être reliés fluidiquement entre eux d'une lamelle 11 à une autre.

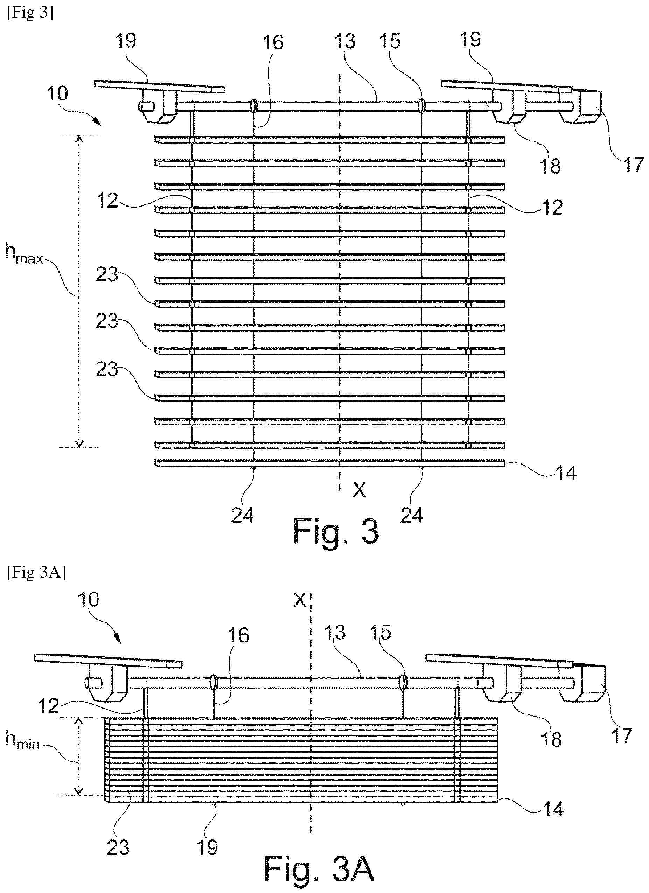

Comme cela est illustré aux figures 3 et 3A, sur lesquelles les composants de contrôle de l'environnement ne sont pas représentés, chaque lamelle 11 comprend un support de fixation 23 sur lequel est(sont) fixé(s) de manière amovible le(s) composants de contrôle de l'environnement 20, 21, 22.

Chaque support de fixation 23 se présente sous la forme d'un tube en aluminium, en polychlorure de vinyle (PVC) ou en acier inoxydable. La taille d'un tube peut être variable en fonction des besoins.

Les supports 23 sont reliés entre eux par des fils 12, de sorte à être suspendus par gravité en étant fixés les uns aux autres dans une position dite déployée. Ainsi, comme cela est illustré aux figures 2 et 3, en position déployée, les lamelles 11 sont espacées entre elles de sorte à couvrir une hauteur suffisante en regard de l'ensemble des plantes d'une ligne de culture verticale 2.

Le dispositif 10 comprend également une barre rotative 13 supportant l'ensemble des lamelles 11 par l'intermédiaire des fils 12. Au moins une bobine 15 est fixée sur la barre rotative 13. Au moins un câble 16 traversant l'ensemble des supports 23 est fixé à une bobine 15 en pouvant s'enrouler autour de cette dernière

Le dispositif 10 comprend, dans sa partie basse, une barre de poids 14 disposée sous l'ensemble des lamelles 11 et parallèle à celles-ci. La barre de poids 14 est elle-même traversée par les câbles 16 et est retenue par ceux-ci par l'intermédiaire de serre-câbles 24. Le poids de la barre de poids 14 est choisi pour permettre d'équilibrer l'ensemble des lamelles 11 afin d'éviter qu'elles ne se balancent et qu'elles s'étendent selon l'axe vertical X dans la position déployée.

Lorsque la barre rotative 13 est mise en rotation sur elle-même dans un sens, les câbles 16 s'enroulent autour des bobines 15 et font remonter la barre de poids 14 le long de l'axe vertical X.

En remontant, la barre de poids 14 entraîne le support 23 de la lamelle 11 la plus basse du dispositif 10 vers le haut qui entraîne à son tour le support 23 de la lamelle 11 au-dessus de ladite lamelle 11 la plus basse et ainsi de suite jusqu'à ce que les lamelles 11 soient empilées les unes aux autres tel que cela est représenté sur figure 3A, dans une position dite repliée. En position repliée, les lamelles 11 empilées les unes sur les autres s'étendent sur une hauteur réduite par rapport à celle qu'elles occupent dans la position déployée. Le rapport entre la hauteur hmin occupée par les lamelles 11 en position repliée sur la hauteur hₘₐₓ occupée par les lamelles 11 en position déployée est égal à 0,15. Ce rapport est à titre indicatif, il dépend de la composition et de la configuration du dispositif 10, en particulier du nombre de lamelles 11 comprises par le dispositif 10.

Inversement, en faisant tourner la barre rotative 13 dans un sens inverse de celui d'enroulement des câbles 16, la barre de poids 14 et les lamelles 11 descendent et s'espacent les unes des autres jusqu'à la position déployée, telle qu'illustrée aux figures 2 et 3.

La barre rotative 13, les bobines 15, les câbles 16, les serre-câbles 24 et la barre de poids 14 forment ainsi un mécanisme de déploiement/repliement du dispositif 10 permettant aux lamelles 11 de passer d'une position déployée, dans laquelle elles sont parallèles et espacées entre elles, à une position repliée, dans laquelle elles sont empilées les unes sur les autres, et inversement.

Le mécanisme de déploiement/repliement peut comprendre un moteur 17 configuré pour faire mettre en rotation la barre rotative 13 sur elle-même. De manière alternative, la mise en rotation de la barre rotative 13 peut se faire manuellement.

Le dispositif 10 comprend également des platines de fixation 18 supportant la barre rotative 13 et configurées pour permettre de fixer le dispositif 10 sur un mur et/ou un toit d'une installation de culture en atmosphère confinée ou semi-confinée. De préférence, les platines de fixation 18 peuvent comprendre des rails 19 adaptés pour faire translater, de manière manuelle ou motorisée, la barre rotative 13, la barre de poids 14 et l'ensemble des lamelles 11 par rapport au mur et/ou au toit.

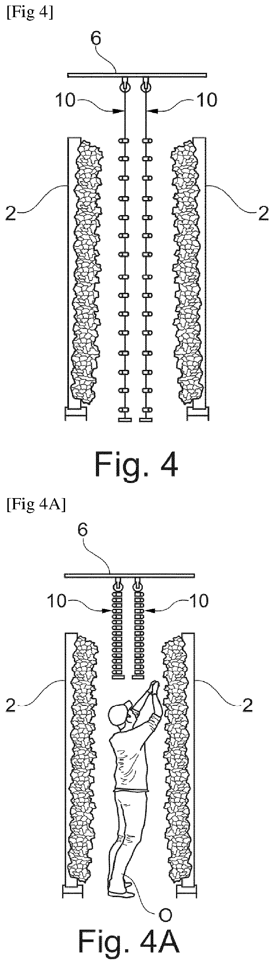

On a illustré aux figures 4 et 4A une installation pour la culture de plantes en atmosphère confinée ou semi-confinée comprenant deux dispositifs 10 selon l'invention agencés côte-à-côte. L'installation comprend deux lignes de culture verticale 2, parallèles entre elles. Chacun des dispositifs 10 est fixé sur le plafond 6 de l'installation, entre les lignes de culture verticale 2.

Sur la figure 4, les lamelles 11 de chacun des dispositifs 10 sont en position déployée et s'étendent en regard des lignes de culture verticale 2. Les composants de contrôle de l'environnement 20, 21 et 22 de chacun des dispositifs 10 sont tous montés de sorte à faire face aux plantes d'une des lignes de culture verticale 2. L'espacement e entre un dispositif 10 et une ligne de culture verticale 2 est trop petit pour permettre à un opérateur O d'accéder à la ligne de culture verticale 2.

Sur la figure 4A, les lamelles 11 de chacun des dispositifs 10 sont en position repliée, rapprochées du plafond 6, et ne sont plus en regard des lignes de culture verticale 2. L'espace E' entre deux lignes de culture verticale 2 adjacentes est suffisant pour former un couloir dans lequel un opérateur 3 peut circuler car les dispositifs 10 n'obstruent pas ce couloir. L'opérateur O peut alors accéder aux plantes des lignes de culture verticale 2, afin de les contrôler et/ou de les polliniser et/ou de les récolter.

L'installation illustrée aux figures 4 et 4A présente donc un gain de surface au sol important par rapport à l'installation 1 illustrée à la figure 1, ce gain pouvant atteindre de 30 à 50 % de la surface totale au sol d'une culture de plantes en atmosphère confinée ou semi-confinée. Cela permet d'augmenter fortement les rendements surfaciques des installations de culture verticale de plantes.

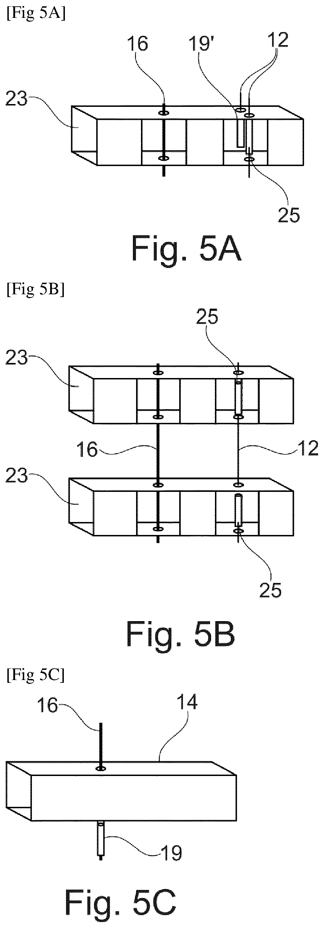

On a illustré à la figure 5A, une partie du support 23 de la lamelle 11 la plus haute du dispositif 10 selon l'invention, la partie correspondant à une section traversée par un câble 16 et un fil 12. Le support 23 est percé pour laisser passer le câble 16 et le fil 12. Une entretoise 25 logée dans chaque support 23 permet déterminer la longueur de fil 12 entre deux supports 23 adjacents, i.e. la distance qui sépare deux lamelles 11 adjacentes dans la position déployée. Le support 23 de la lamelle 11 la plus haute du dispositif 10 loge un serre-câble 19' qui fixe une des extrémités du fil 12, celle-ci formant ainsi une boucle dans laquelle est insérée la barre rotative 13.

La figure 5B illustre une partie des supports 23 de deux lamelles 11 adjacentes, maintenus par les câbles 16 et à distance l'un de l'autre par les entretoises 25.

La figure 5C illustre une partie de la barre de poids 14, traversée par le câble 16 qui son poids par l'intermédiaire du serre-câble 19.

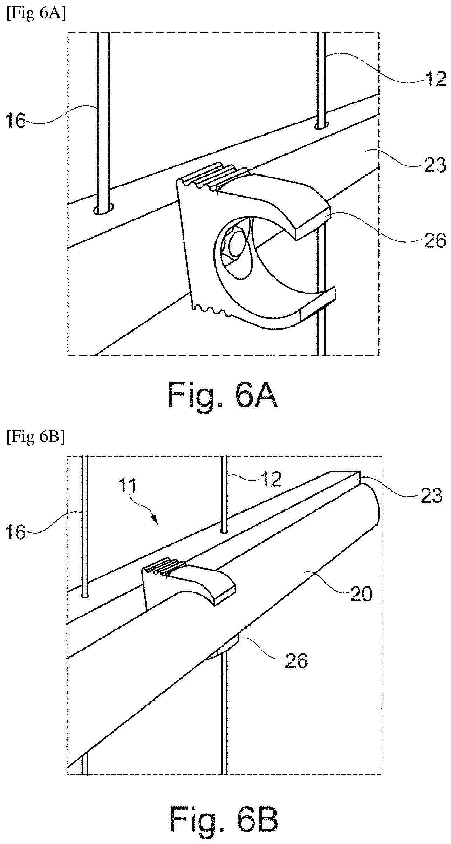

On a illustré aux figures 6A et 6B une partie de support 23 sans et avec une source de lumière 20 qui y est fixé de manière amovible. Cette fixation amovible est réalisée par des pinces de clipsage 26 fixées sur le support 23 et dans lesquelles vient se clipser la source de lumière 20. La source de lumière 20 peut être une source de lumière artificielle, par exemple une LED ou un tube fluorescent.

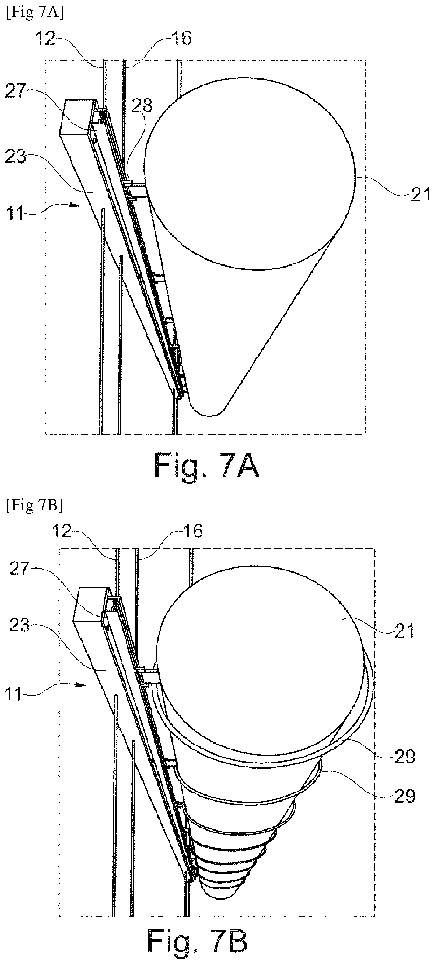

La figure 7A illustre une partie d'un système 21 de ventilation et/ou de climatisation et/ou d'apport en CO₂, sous la forme d'une gaine de ventilation fixée de manière amovible sur un support 23. Pour ce faire, le support 23 comprend une attache 27 sous la forme d'un rail dans laquelle sont insérées des sangles 28 de sorte à suspendre la gaine de ventilation 21 au support 23. De manière alternative, l'attache 27 peut être remplacée par une pluralité de mousquetons dans chacun desquels une des sangles 28 peut être accrochée. Comme illustré à la figure 7B, des anneaux de maintien 29 peuvent également être utilisés en lieu et place des sangles 28.

Une partie d'un système d'humidification 22 peut être sous la forme d'un tuyau comprenant des buses de projection configurées pour la brumisation d'eau, le tuyau étant supporté par un support 23 de manière similaire à un système 21 de ventilation et/ou de climatisation et/ou d'apport en CO₂. Il est également possible de clipser le tuyau du système d'humidification 22 au support 23 par l'intermédiaire des mêmes pinces de clipsage 26 que celles utilisées pour le clipsage d'une source de lumière 20.

Le dispositif 10 selon la présente invention est donc particulièrement adapté pour un changement facile des composants de contrôle de l'environnement. Le remplacement de composants de contrôle déficients et/ou l'adaptation de la répartition des composants de contrôle en fonction des plantes cultivées est(sont) donc facilement mise(s) en œuvre.

En particulier, les sources de lumière 20 peuvent être facilement fixées/démontées des supports 23. On peut donc facilement adapter les sources de lumière 20 en fonction de la variété de plantes cultivée et/ou en fonction du cycle de croissance des plantes et/ou en fonction de la partie des plantes qu'on souhaite illuminer. En particulier, l'homme du métier sait déterminer quelle source de lumière 20 présente une intensité lumineuse et/ou un spectre lumineux les plus adaptés en fonction de la variété de plantes cultivée.

Par exemple, dans le cas de plants de tomates, des sources de lumière 20 de forte intensité lumineuse et émettant dans le rouge et le bleu sont à privilégier durant l'étape de croissance. Des sources de lumière 20 émettant dans l'ultraviolet sont à privilégier durant l'étape de pollinisation. Des sources de lumière 20 d'intensité lumineuse différente et émettant dans l'ultraviolet le bleu sont à privilégier durant l'étape de fruitaison.

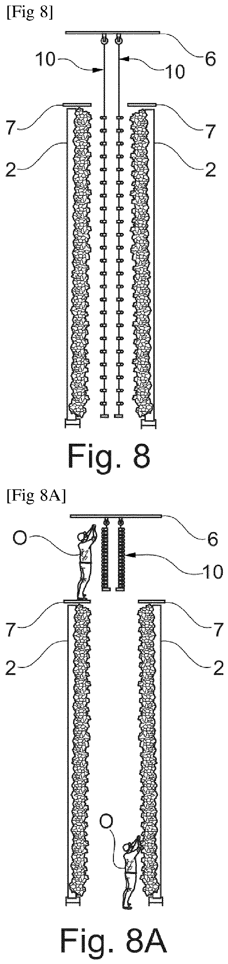

On a illustré aux figures 8 et 8A un mode de réalisation avantageux d'une installation pour la culture de plantes en atmosphère confinée ou semi-confinée comprenant deux dispositifs 10 selon l'invention. L'installation est similaire à celle présentée aux figures 4 et 4A excepté qu'elle comprend une plateforme 7 au-dessus de chacune des lignes de culture verticale 2. Ainsi, comme illustré à la figure 8A, lorsque les lamelles 11 sont en position repliée, un opérateur O peut accéder aux différents éléments des dispositifs 10 depuis l'une ou l'autre des plateformes 7. Par exemple, l'opérateur O peut effectuer des opérations de maintenance des composants de contrôle de l'environnement 20, 21 et 22. Durant ces opérations de maintenance, l'opérateur 3 peut facilement adapter les composants 20, 21 et 22 et leur répartition en fonction des plantes cultivées et donc en fonction de la demande du marché, de la saisonnalité etc.

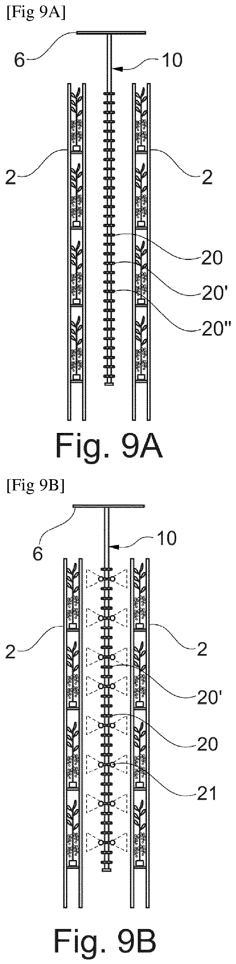

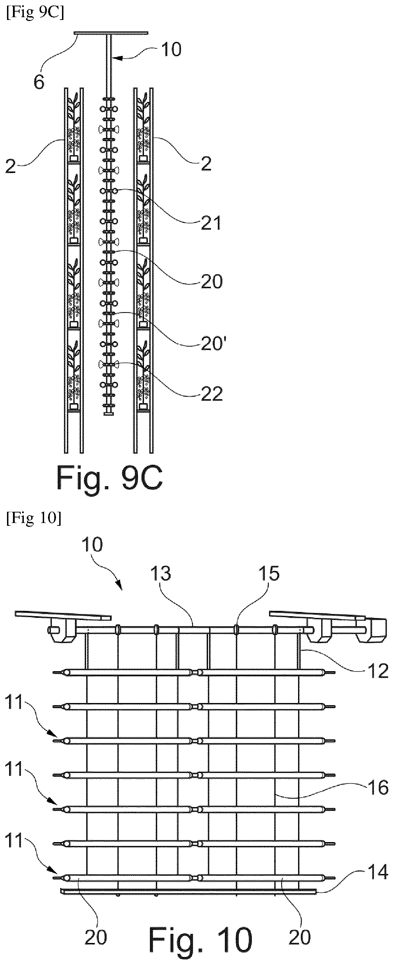

On a illustré aux figures 9A, 9B et 9C une partie d'une installation pour la culture de tomates comprenant un dispositif 10 selon l'invention, chacune de ces figures représentant un mode différent d'agencement des composants de contrôle de l'environnement pour la culture de tomates. Contrairement aux figures 4, 4A, 8 et 8A, l'installation selon les figures 9A à 9C ne comprend qu'un seul dispositif 10 agencé entre les lignes de culture 2, les composants de contrôle de l'environnement étant agencés sur chaque côté latéral du dispositif 10. Pour chaque lamelle 11, le composant de contrôle de l'environnement agencé sur un côté latéral du dispositif 10 est également un contrepoids permettant de compenser le poids du composant de contrôle de l'environnement agencé sur l'autre côté latéral du dispositif 10, et inversement.

Le dispositif 10 de la figure 9A comprend uniquement des sources de lumière 20, 20' et 20'' qui peuvent être d'intensités différentes et/ou de spectres lumineux différents.

Le dispositif 10 de la figure 9B comprend des sources de lumière 20, 20' d'intensités différentes et de spectres différents, ainsi que des systèmes 21 de ventilation et/ou de climatisation et/ou d'apport en CO₂.

Le dispositif 10 de la figure 9C comprend des sources de lumière 20, 20' d'intensités différentes et de spectres différents, des systèmes 21 de ventilation et/ou de climatisation et/ou d'apport en CO₂, ainsi que des systèmes d'humidification 22.

On a illustré à la figure 10 un autre mode de réalisation d'un dispositif 10 selon l'invention dans lequel chaque lamelle 11 comprend deux sources de lumière 20 qui s'étendent l'une dans le prolongement de l'autre et qui sont reliées électriquement en série.

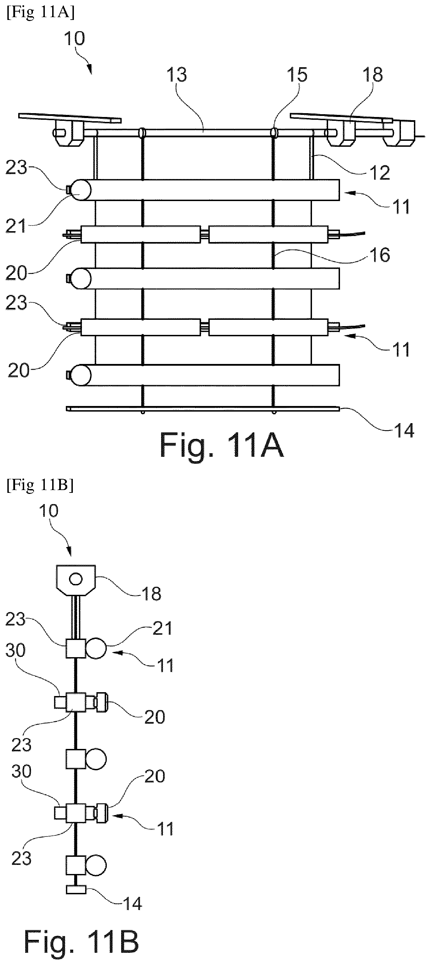

On a illustré aux figures 11A et 11B un autre mode de réalisation d'un dispositif 10 comprenant des lamelles 11 comprenant un support 23 sur lequel est monté(e) une source de lumière 20 ou un système 21 de ventilation et/ou de climatisation et/ou d'apport en CO₂. Les lamelles 11 comprenant une source de lumière 20 comprennent également au moins un contrepoids 30 monté sur le support 23 du côté opposé à la source de lumière 20 de sorte à compenser le poids de ladite source de lumière 20.

Les contrepoids 30 compensent le poids des sources de lumière 20 ce qui est particulièrement avantageux pour l'équilibre d'un dispositif 10 dont les lamelles 11 occupent une grande hauteur en position déployée. En particulier, le poids des sources de lumière 20 peut être conséquent, par exemple les sources de lumière 20 peuvent être des LED de 400 W et peser chacune 5 kg.

Un contrepoids 30 peut être un tube en acier inoxydable clipsé sur le support 23 par des pinces de clipsage 26. Un contrepoids 30 peut également être une sphère comprenant un trou taraudé pour être vissée sur le support 23.

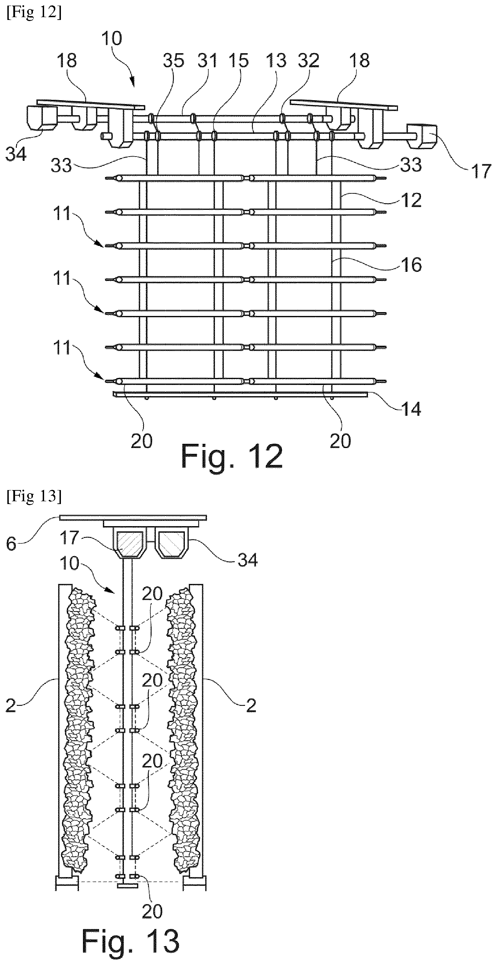

On a illustré à la figure 12 un autre mode de réalisation d'un dispositif 10 selon l'invention, le dispositif 10 étant similaire à celui illustré à la figure 10 excepté qu'il comprend également un système de levée/descente.

Le système de levée/descente comprend une barre de levée/descente 31, sur laquelle sont montées des bobines 32, et des ficelles 33 fixées auxdites bobines 32 et à la lamelle 11 du dessus. Dans ce mode de réalisation, les lamelles 11 sont supportées par la barre de levée/descente 31 par l'intermédiaire des ficelles 33 qui reprennent le poids de chacune des lamelles 11 transmis à la lamelle 11 du dessus par les fils 12. La barre de levée/descente 31 est supportée par les platines de fixation 18.

Lorsque la barre de levée/descente 31 est mise en rotation sur elle-même dans un sens, les ficelles 33 s'enroulent autour des bobines 32 ce qui fait remonter l'ensemble des lamelles 11 vers une position haute.

Inversement, en faisant tourner la barre de levée/descente 31 dans un sens inverse de celui de l'enroulement des ficelles 33, l'ensemble des lamelles 11 descendent vers une position basse.

L'enroulement et le désenroulement des ficelles 33 ne modifient pas l'espacement entre les lamelles 11.

Le système de levée/descente peut comprendre un moteur 34 configuré pour mettre en rotation la barre de levée/descente 31 sur elle-même. De manière alternative, la mise en rotation de la barre de levée/descente 31 peut se faire de manuellement.

Le système de levée/descente peut comprendre des bobines 35, montées sur la barre rotative 13, sur lesquelles les ficelles 33 prennent appuis. Lors de l'enroulement ou du désenroulement des ficelles 33, celles-ci coulissent sur les bobines 35 ce qui assure un bon enroulement/désenroulement des ficelles 33 et limite la friction des ficelles 33 sur la barre rotative 13.

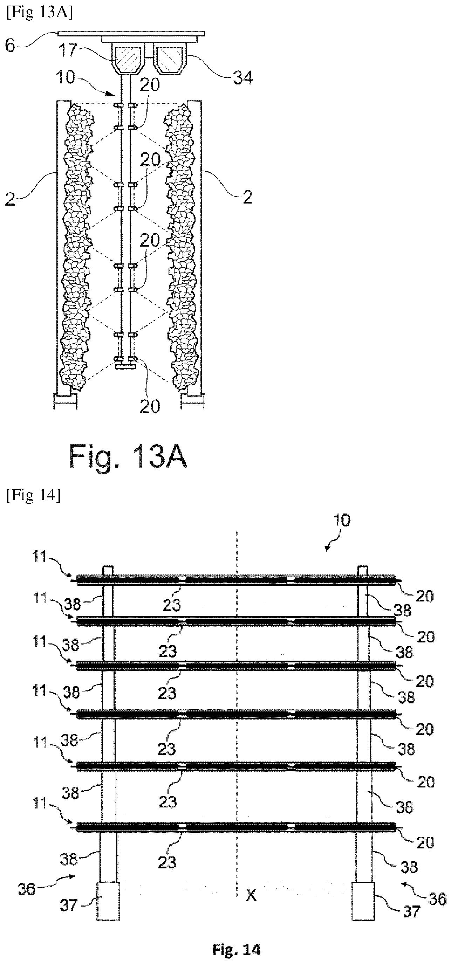

On a illustré aux figures 13 et 13A une installation pour la culture de plantes en atmosphère confinée ou semi-confinée comprenant un dispositif 10 comprenant un système de levée/descente similaire à celui de la figure 12. L'installation comprend deux lignes de culture verticale 2, parallèles entre elles. Le dispositifs 10 est fixé sur le plafond 6 de l'installation, entre les lignes de culture verticale 2.

Sur la figure 13, les lamelles 11 du dispositif 10 sont en position déployée et en position basse de sorte que les sources de lumière 20 des lamelles 11 éclairent une première portion des plantes des lignes de culture verticale 2.

Sur la figure 13A, les lamelles 11 du dispositif 10 sont en position déployée et en position haute de sorte que les sources de lumière 20 des lamelles 11 éclairent une deuxième portion des plantes des lignes de culture verticale 2.

Lors de la croissance des plantes, le dispositif 10 peut ainsi passer d'une position basse à une position haute de manière cyclique afin d'illuminer à tour de rôle les première et deuxième portions des plantes des lignes de culture verticale 2. Il est ainsi possible de réduire le nombre de sources de lumière 20 nécessaires pour garantir un bon apport d'énergie lumineuse aux plantes de l'installation. Cela permet avantageusement, de diminuer le poids du dispositif 10, de réduire son coût et de diminuer jusqu'à 33 % la consommation électrique pour l'illumination des plantes.

Par exemple, dans le mode de réalisation illustré aux figures 13 et 13A, l'installation comprend huit lamelles 11 comprenant des sources de lumière 20 à chaque côté du dispositif 10, les sources de lumière 20 étant des LEDs de 125 W. L'illumination des plantes des lignes de culture verticale 2 est réalisée par les étapes suivantes :
i) illumination de la première portion des plantes des lignes de culture verticale 2 pendant une heure,
ii) passage des lamelles 11 de la position basse à la position haute,
iii) illumination de la deuxième portion des plantes des lignes de culture verticale 2 pendant une heure,
iv) passage des lamelles 11 de la position haute à la position basse.

Ces étapes i) à iv) peuvent être répétées selon des cycles prédéterminés à intervalles de temps réguliers ou non.

En comparaison, sans fonctionnement cyclique de l'illumination des plantes, quinze lamelles 11 comprenant des LEDs de 100 W en tant que sources de lumière 20 de chaque côté du dispositif 10, seraient nécessaires pour illuminer les plantes des lignes de culture verticale 2.

On a illustré à la figure 14 un autre mode de réalisation d'un dispositif 10 selon l'invention. Le dispositif 10 comprend des lamelles 11 similaires aux lamelles 11 décrites précédemment, c'est-à-dire comprenant un support 23 sur lequel sont montés des composants de contrôle de l'environnement, par exemple des sources de lumière 20.

Selon le mode de réalisation de la figure 14, le dispositif 10 comprend deux mâts télescopiques 36 chacun comprenant un pied 37 et des parties coulissantes 38. Les parties coulissantes 38 sont mobiles en translation le long de l'axe longitudinal X entre elles et par rapport au pied 37 entre une position repliée, dans laquelle les parties coulissantes 38 sont emboîtées les unes dans les autres, et une position déployée, illustrée à la figure 14.

Les lamelles 11 sont montées sur les parties coulissantes 38 de sorte que lorsque le mât télescopique 36 est en position repliée, les lamelles 11 sont également en position repliée, et, lorsque le mât télescopique 36 est en position déployée, les lamelles 11 sont également en position déployée.

Le dispositif 10 selon la figure 14 comprend également un mécanisme de déploiement/repliement comprenant un vérin ou une crémaillère motorisée, adapté(e) pour déployer et replier chaque mât télescopiques 36.

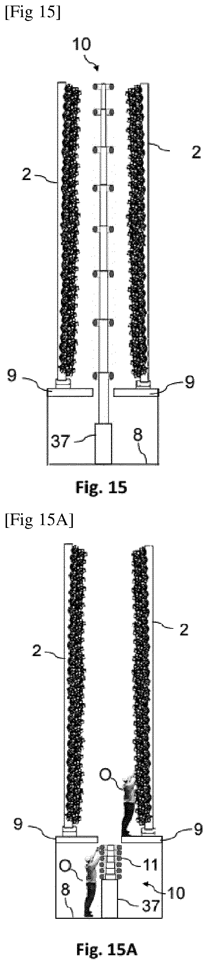

On a illustré aux figures 15 et 15A une installation pour la culture de plantes en atmosphère confinée ou semi-confinée comprenant un dispositif 10 selon la figure 14. L'installation comprend deux lignes de culture verticale 2, parallèles entre elles. Le pied 37 du dispositif 10 est fixé sur le sol 8 de l'installation, entre les lignes de culture verticale 2.

Sur la figure 15, les lamelles 11 du dispositif 10 sont en position déployée et s'étendent en regard des lignes de culture verticale 2. Sur la figure 15A, les lamelles 11 du dispositif 10 sont en position repliée, rapprochées du sol 8, et ne sont plus en regard des lignes de culture verticale 2.

L'installation comprend également des plateformes 9 agencées au-dessus du dispositif 10 en position repliée et sous les lignes de culture 2. Ainsi, lorsque les lamelles 11 sont en position repliée, un opérateur O peut accéder aux lignes de culture 2 à partir des plateformes 9. Un opérateur O peut également aux différents éléments du dispositif 10 depuis le sol 8 lorsque les lamelles 11 sont en position repliée.

Les montants télescopiques 36 et le vérin ou la crémaillère motorisée forment également ensemble un système de levée/descente configuré pour faire translater verticalement les lamelles entre une position haute et une position basse. L'emboîtement de la partie mobile 38 la plus basse dans le pied 37 permet de passer de la position haute à la position basse. Inversement, le déploiement par coulissement de la partie mobile 38 la plus basse hors du pied 37 permet de passer de la position basse à la position haute.

D'autres variantes et améliorations peuvent être envisagées sans pour autant sortir du cadre de l'invention.

Par exemple, d'autres mécanismes de déploiement/repliement des lamelles sont envisageable. Par exemple, on peut prévoir que la barre rotative 13 soit remplacée par un support fixe et que seules les bobines 15 sont mises en rotation sur elles-mêmes afin d'enrouler les câbles 16.

## Revendications

1. Dispositif (10) pour le contrôle de l'environnement de cultures de plantes en atmosphère confinée ou semi-confinée, comprenant :
- une pluralité de lamelles (11) liées mécaniquement entre elles et montées mobiles en translation verticale entre une position déployée, dans laquelle elles sont espacées les unes des autres, et une position repliée, dans laquelle les lamelles sont empilées les unes sur les autres, au moins une partie des lamelles comprenant un ou plusieurs composants de contrôle de l'environnement choisis parmi :
une source de lumière (20) adaptée pour la culture des plantes,
une partie d'un système (21) de ventilation et/ou de climatisation et/ou d'apport en CO₂,
une partie d'un système d'humidification (22),
- un mécanisme de déploiement/repliement configuré pour faire translater les lamelles de la position déployée à la position repliée et inversement.

2. Dispositif selon la revendication 1, dans lequel au moins une, de préférence chacune, des lamelles comprend un support (23) sur lequel le(s) composant(s) de contrôle de l'environnement est(sont) fixé(s) de manière amovible, de préférence le(s) support(s) étant en un matériau inerte chimiquement vis-à-vis de l'eau, de préférence en aluminium, en polychlorure de vinyle ou en acier inoxydable.

3. Dispositif selon l'une des revendications précédentes, les lamelles étant parallèles entre elles.

4. Dispositif selon l'une des revendications précédentes, le rapport entre la hauteur (hₘᵢₙ) occupée par les lamelles en position repliée sur la hauteur (hₘₐₓ) occupée par les lamelles en position déployée étant inférieur à 0,50, de préférence inférieur à 0,25, de préférence inférieur à 0,20.

5. Dispositif selon l'une des revendications précédentes, la hauteur occupée par les lamelles en position déployée étant comprise entre 1 m et 20 m, et/ou, la hauteur des lamelles en position repliée étant comprise entre 0,15 m et 5 m.

6. Dispositif selon l'une quelconque des revendications précédentes, comprenant des fils (12) pour lier mécaniquement les lamelles entre elles de sorte à être suspendues les unes aux autres par gravité dans la position déployée, de préférence le dispositif comprenant des entretoises (25) configurées pour maintenir constante la longueur des fils (12) entre deux lamelles adjacentes, de préférence le dispositif comprenant au moins un poids, de préférence sous la forme d'une barre de poids (14), lié mécaniquement aux lamelles en dessous de celles-ci de sorte à maintenir à la verticale l'axe longitudinal (X) le long duquel sont superposées les lamelles.

7. Dispositif selon l'une des revendications précédentes, le mécanisme de déploiement/repliement comprenant au moins un câble (16), de préférence traversant les lamelles, et fixé à la lamelle du dessous, ou le cas échéant au poids, de sorte qu'en tirant sur le câble, les lamelles sont ramenées de la position déployée à la position repliée, de préférence le mécanisme de déploiement/repliement comprenant au moins une bobine (15) configurée pour enrouler le câble de manière manuelle ou de manière motorisée.

8. Dispositif selon l'une des revendications précédentes, comprenant des platines de fixation (18) configurées pour fixer le dispositif sur un mur et/ou un toit (6) d'une installation de culture de plantes en atmosphère confinée ou semi-confinée, les platines de fixation comprenant de préférence des rails (19) adaptés pour faire translater de manière manuelle ou motorisée les lamelles par rapport au mur et/ou au toit.

9. Dispositif selon l'une des revendications 1 à 5, comprenant au moins un mât télescopique (36) comprenant un pied (37) destiné être fixé à une installation et des parties coulissantes (38) sur lesquelles sont montées les lamelles, les parties coulissantes étant mobiles par rapport au pied entre une position repliée dans laquelle les lamelles sont en position repliée et une position déployée dans laquelle les lamelles les lamelles sont en position déployée, de préférence le mécanisme de déploiement/repliement comprenant au moins un vérin ou au moins une crémaillère, de préférence motorisée, adapté(e) pour déployer et replier le(s) montant(s) télescopique(s).

10. Dispositif selon l'une des revendications précédentes, la source de lumière artificielle étant une LED ou un tube fluorescent, et/ou, la partie du système de ventilation et/ou de climatisation et/ou d'apport en CO₂ étant une gaine de ventilation et d'apport en CO₂, et/ou, la partie du système d'humidification étant un tuyau comprenant des buses de projection pour la brumisation d'eau.

11. Dispositif selon l'une des revendications précédentes, comprenant un système de levée/descente configuré pour faire translater verticalement les lamelles entre une position basse et une position haute, les lamelles étant en position déployée dans les positions basse et haute.

12. Installation pour la culture de plantes en atmosphère confinée ou semi-confinée, comprenant :
- au moins une ligne de culture (2), destinée à supporter des plantes,
- au moins un dispositif (10) selon l'une quelconque des revendications précédentes, agencé de sorte que dans la position déployée les lamelles s'étendent en regard de la ligne de culture.

13. Installation selon la revendication 12, comprenant au moins deux lignes de culture, de préférence parallèles entre elles, le dispositif étant agencé entre les deux lignes de culture de sorte que dans la position repliée, l'espace entre les deux lignes de culture, dégagé des lamelles, forme un couloir accessible pour un opérateur (O), de préférence l'espace entre les deux lignes de culture étant compris entre 0,50 m et 5 m.

14. Installation selon l'une des revendications 12 et 13, comprenant au moins une plateforme (7) située au-dessus d'une des lignes de culture et à partir de laquelle un opérateur a accès au dispositif dans la position repliée des lamelles.

15. Procédé de fonctionnement d'une installation pour la culture de plantes en atmosphère confinée ou semi-confinée,
l'installation comprenant au moins une ligne de culture (2) supportant des plantes et un dispositif (10) comprenant plusieurs sources de lumière (20) adaptées pour la culture des plantes, les sources de lumière étant mobiles en translation verticale par rapport à la ligne de culture entre une position basse et une position haute,
le procédé comprenant les étapes suivantes :
i) illumination d'une portion des plantes de la ligne de culture pendant un intervalle de temps prédéfini, les sources de lumière étant en position basse,
ii) passage des sources de lumière de la position basse à la position haute,
iii) illumination d'une portion des plantes de la ligne de culture pendant un intervalle de temps prédéfini, les sources de lumière étant en position haute,
iv) passage des sources de lumière de la position haute à la position basse,
de préférence les étapes i) à iv) étant répétées selon des cycles prédéterminés à intervalles de temps réguliers ou non.
